# EUROPÄISCHE PATENTSCHRIFT

(11) **EP 1 411 312 B1**
(45) Veröffentlichungstag und Bekanntmachung des Hinweises auf die Patenterteilung: **08.11.2006**
(21) Anmeldenummer: 03021797.0
(22) Anmeldetag: 26.09.2003
(51) Int. Cl.: F28D 20/00, F24H 1/20

(54) **Heizanlage mit insbesondere einem Pufferspeicher bzw. Kombispeicherkessel**
Heating installation with a storage resp. combined storage heater.
Installation de chauffage avec accumulateur resp. chaudière à accumulation

(30) Priorität: 14.10.2002 DE 10247822
(43) Veröffentlichungstag der Anmeldung: 21.04.2004
(73) Patentinhaber: Carl Capito Heiztechnik GmbH, 57290 Neunkirchen (DE)
(72) Erfinder: von Gradowski, Bernhard, 57520 Friedewald (DE); Grau, Horst-Edwin, 57290 Neunkirchen (DE)
(74) Vertreter: Valentin, Ekkehard

(56) Entgegenhaltungen:
- DE-A- 10 017 640
- DE-U- 29 922 417
- DE-U- 29 923 819

## Beschreibung

Die Erfindung betrifft eine Heizanlage mit insbesondere einem Pufferspeicher bzw. Kombispeicherkessel, der als solarer Schichtspeicher optional mit integrierter gas- oder ölbefeuerter Brennkammer ausgebildet ist und mehrere Kreisläufe vereint, wie einen Solarkreislauf, einen Kreislauf für Wasch- und Duschwasser und eine Versorgung einer Heizung, sowie Anschlüsse zur Aufnahme von an die Verbraucherleitungen angeschlossenen Wärmetauschern aufweist, wobei im unteren Bereich des Pufferspeichers bzw. Kombispeicherkessels oberhalb eines dort angeschlossenen Solar-Wärmetauschers ein den Innenraum des Kessels unterteilender Schichtungsstabilisator angeordnet und über diesen der untere Kesselraum mit dem oberen, größeren Puffer-Kesselraum strömungstechnisch verbunden ist, wie durch die DE-A-100 17 640 A bekannt geworden.

Solche Heizanlagen mit Kombispeicher, wie durch die Veröffentlichung "ÖKO-TEST - Sonderdruck aus 1/2002", Seiten 1 bis 3, bekanntgeworden, bieten eine energiesparende Lösung, um mittels Solarkollektoren und im Speicherkessel angeordnetem Solar-Wärmetauscher sowohl das Wasser zu erhitzen als auch Wärme zur Unterstützung der Heizung zu liefern. Diese Anlagen haben nur einen Speicher, der aber ein großes Puffervolumen bietet. Der Kombispeicher ist direkt mit dem Kreislauf der Heizkörper bzw. Fußbodenheizung verbunden. Wenn der Kombispeicher zusätzlich einen Gas- oder Ölbrenner besitzt, kann bei zu wenig Sonnenschein nachgeheizt werden.

Aus der DE-U1-299 22 417 ist ein Wärmemedium-Speicher bekannt, der im unteren Bereich eines Behälters eine Heizeinrichtung aufweist, über der eine Abdeckung mit einem Steigrohr angeordnet ist.

Ein Kombispeicher für die Speicherung von Heiz- und Trinkwasser nach der DE-U1-299 23 819 besteht aus einem Behälter mit Vor- und Rücklaufanschlüssen für das Heizmedium und einem gegen den Behälterinnenraum für einen gewendelten Durchlauferhitzer abgeschirmten Bereich. Die Abschirmung ist als eine mit der Behälterwand einen Ringspalt definierende Hülse ausgebildet.

Beim Betrieb eines solaren Schichtspeichers wird ein einfaches physikalisches Prinzip genutzt: Heißes Wasser ist leichter als kaltes und sammelt sich deshalb im oberen Speicherbereich. Durch unterschiedliche Temperaturen stehen im Kombispeicher verschiedene Schichten übereinander, wobei sich ganz oben das Wasser mit hoher Temperatur befindet. Von einem Verbraucher benötigtes Wasser wird durch dieses heiße Heizungswasser über einen Wärmetauscher erhitzt. Aus dem mittleren Bereich des Schichtspeichers, wo auch der bei nicht ausreichender Sonneneinstrahlung die Bereiche Trinkwassererwärmung und Heizungswasser nach Bedarf nachheizende Brenner bzw. die Brennkammer angeordnet ist, wird die Wärme für die Heizung entnommen.

Der untere und kühlste Speicherbereich bleibt für die Erwärmung durch die Solaranlage vorbehalten. Dabei sorgt ein innenliegender Wärmetauscher für die Wärmeübertragung vom Kollektorkreislauf an das Heizungswasser. Aufgrund des sogenannten "Low-Flow-Prinzips", was geringe Volumenströme im Solarkreis mit hohem Temperaturniveau bedeutet, wird schon bei relativ geringer Sonnenscheindauer ein heißes, solares Duschbad durch Einschichtung des erwärmten Heizungswassers in den oberen Speicherbereich möglich.

Die bekannten Heizanlagen mit Kombispeicher sind allerdings sehr kompliziert aufgebaut, was sowohl die erforderliche Verrohrung als auch den dafür benötigten Platzbedarf und den notwendigen Einsatz von Pumpen als auch die Wärmeverluste anbelangt.

Der Erfindung liegt daher die Aufgabe zugrunde, eine gattungsgemäße Heizanlage zu schaffen, die in baulich einfacherer Weise einen verbesserten solaren Schichtspeicherbetrieb ermöglicht.

Diese Aufgabe wird erfindungsgemäß dadurch gelöst, daß der Schichtungsstabilisator aus einer den Kesseldurchmesser ausfüllenden Ronde aus einem gut wärmeisolierenden Material, z. B. Polypropylen, besteht, in die ein sich über nahezu die gesamte Höhe des oberen Puffer-Kesselraums erstreckendes Steigrohr und von diesem entfernt ein in den unteren Kesselraum eintauchendes Fallrohr, vorzugsweise sind diese Rohre ebenfalls aus einem gut wärmeisolierenden Material hergestellt, gesteckt sind. Die Schwerkraftzirkulation wird somit gezielt von oben nach unten geleitet, d.h. das erwärmte Wasser über das Steigrohr in den oberen Puffer-Kesselraum und das dortige kalte Wasser über das Fallrohr zur Erwärmung bzw. Aufheizung in den unteren Kesselraum. Der zunächst insgesamt mit kaltem Wasser befüllte Kesselinhalt wird horizontal unterteilt, wobei der untere Kesselraum sehr viel kleiner als der Puffer-Kesselraum ist. Mit dem Beginn des Wärmeeintrags über den Solar-Wärmetauscher erwärmt sich die relativ kleine Menge des Wassers unter dem Schichtungsstabilisator sehr schnell und steigt dann schon gleich, d.h. sobald die Temperatur höher ist als in dem Puffer-Kesselraum oberhalb des Schichtungsstabilisators, aufgrund der natürlichen Konvektion nach oben. Eine Pumpe zur Wasserförderung ist somit nicht erforderlich. Das in den Puffer-Kesselraum aufsteigende erwärmte Wasser bewirkt gleichzeitig, daß das kalte Wasser von dort unter den Schichtungsstabilisator gedrückt wird, sich danach folglich am Solar-Wärmetauscher erwärmt und dann ebenfalls wieder in den oberen Raum aufsteigt. Diese Schichtung bzw. Schwerkraftzirkulation wird so lange fortgesetzt, bis der Speicherkessel komplett durchgeheizt ist und überall im Speicherkessel die gleiche Wassertemperatur vorliegt.

Der Schichtungsstabilisator benötigt zur sicheren Trennung des kalten Wassers von dem aufgeheizten Wasser im übrigen nicht einmal eine Dichtung, da die natürliche Oberflächenspannung des Wassers verhindert, daß dieses in kleine Spalte eintritt, wie zwischen dem Außenrand der beispielsweise allenfalls 20 bis 50 mm dicken Ronde und der Innenwand des Speicherbehälters.

Nach einem bevorzugten Vorschlag der Erfindung sind das Steig- und das Fallrohr in einer Ebene einander gegenüberliegend nahe am Außenumfang der Ronde angeordnet. Diese weitestgehend außenliegende Anordnung der Rohre in der Ronde schränkt beim Einbau des Schichtungsstabilisators in den Kessel dessen für Einbauten benötigten Freiraum nicht ein. Das Steigrohr führt zudem die Wärme an der Brennkammer vorbei, so daß Verluste durch Zug durch den Schornstein vermieden werden. Der Einbau des Schichtungsstabilisators ist hierbei äußerst montagefreundlich, denn er braucht einfach nur bis zu im Speicherkessel vorgesehenen Anschlägen bzw. Anschlaglaschen eingeschoben zu werden und ist dann nach oben und unten justiert.

Nach einer Ausgestaltung der Erfindung ist oben auf dem Steigrohr eine mit einer Durchlaßöffnung versehene Abschlußkappe, einfachstenfalls in Form eines Stopfens mit einer Bohrung, vorgesehen. Hiermit läßt sich in sehr einfacher Weise verhindern, daß mit der im unteren Kesselraum ansteigenden Temperatur schon gleich zu viel Wasser mit dann noch zu niedrigem Temperaturniveau aufsteigt und in den oberen Puffer-Kesselraum gelangt. Alternativ läßt sich das vorteilhaft auch durch ein auf das Steigrohr gesetztes Thermostat erreichen, das allerdings teurer als eine einfache Kappe oder Stopfen ist, dafür aber die Möglichkeit bietet, den Schichtaufbau in eine Regelung einzubeziehen.

Der große Vorteil der erfindungsgemäßen Schichtung liegt somit darin, daß die Solarenergie in kurzer Zeit nach dem Schwerkraftpinzip in den oberen Bereich, d.h. den größeren Puffer-Kesselraum transportiert wird, ohne daß dabei der mittlere Bereich des Puffer-Kesselraums erwärmt wird. Dadurch läßt sich erwärmtes Brauchwasser auf einem höheren Tempeaturniveau schon nach kurzer Sonneneinstrahlung nutzen, woraus eine bessere Nutzung regenerativer Energien resultiert.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einem schematischen Längsschnitt in einer ersten Ausführung einen Pufferspeicher;
- Fig. 2: den Pufferspeicher nach Fig. 1 von rechts gesehen;
- Fig. 3: in einem schematischen Längsschnitt eine andere, zusätzlich eine Brennkammer aufweisende Ausführung in Form eines Kombispeicherkessels;
- Fig. 4: eine Draufsicht des Kombispeicherkessels nach Fig. 3;
- Fig. 5: den Kombispeicherkessel nach Fig. 3 von rechts gesehen; und
- Fig. 6: als Einzelheit einen Schichtungsstabilisator.

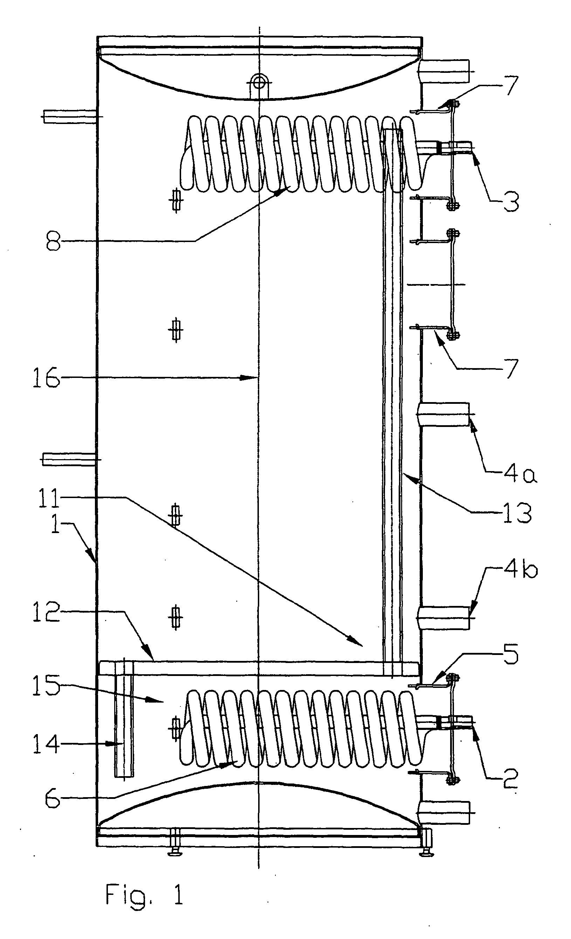

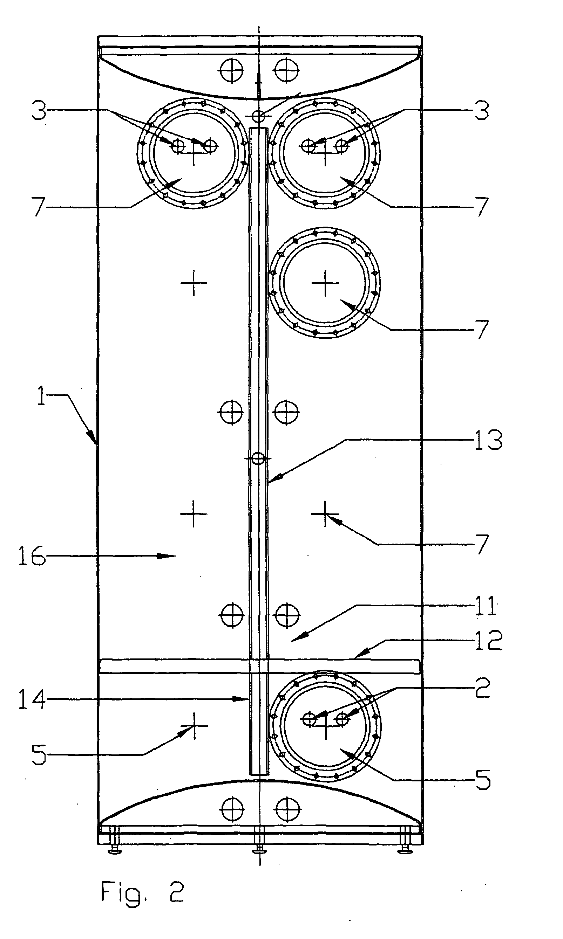

Ein in den Fig. 1 und 2 gezeigter Pufferspeicher 1 einer Heizanlage wird als solarer Schichtspeicher betrieben und vereint mehrere Kreisläufe, wie einen Solarkreislauf 2, einen Wasch- und Duschwasserkreislauf 3 und eine Versorgung einer Heizung mit den Anschlüssen für Vorlauf 4 a und Rücklauf 4 b (alles schematisch angedeutet). Zum Erhitzen des Wasserinhalts des Pufferspeichers 1 besitzt dieser in seinem unteren Bereich oberhalb eines Entleerungsrohres zumindest einen Halsstutzen 5 bzw. Anschluß für einen in diesen einzubauenden Solar-Wärmetauscher 6. Über die Höhe des Kombispeicherkessels 1 sind verteilt weitere Halbstutzen 7 für Wärmetauscher 8 vorgesehen, die über den Wasch- und Duschwasserkreislauf 3 zu einem Bad bzw. von den übrigen Anschlüssen zu anderen Verbrauchern führen (vgl. auch Fig. 2, in der weitere Anschlußmöglichkeiten angedeutet sind).

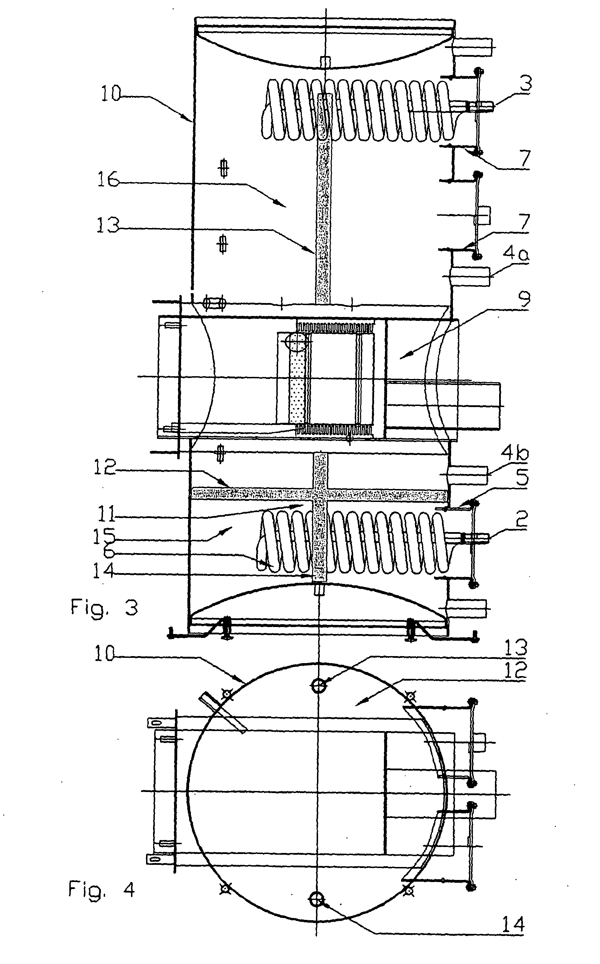

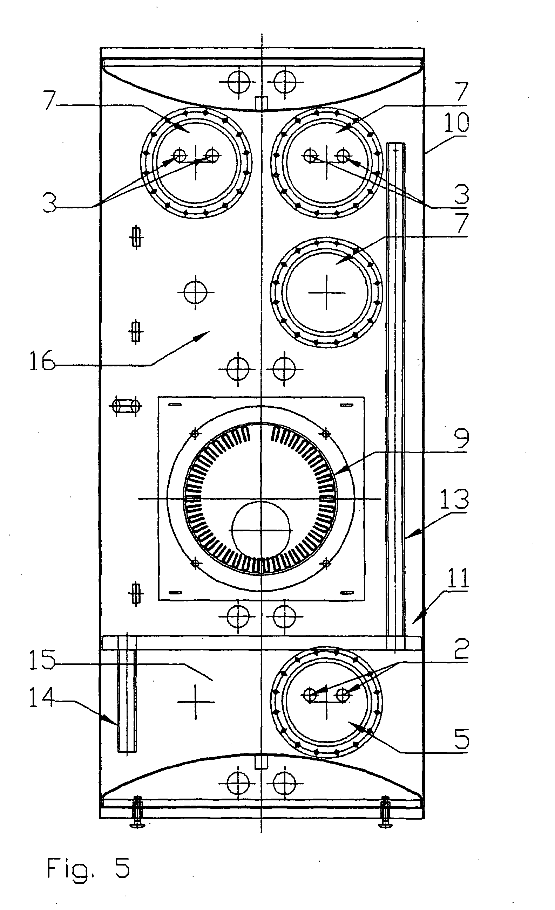

Bei einer anderen, in den Fig. 3 bis 5 dargestellten Ausführung in Form eines Kombispeicherkessels 10 einer Heizanlage liegt als Unterschied zu dem vorbeschriebenen Pufferspeicher, so daß gleiche Bauteile mit denselben Bezugsziffern versehen sind, lediglich vor, daß dort im mittleren Bereich des Kessels außerdem eine Brennkammer 9 zur Gas- oder Ölbeheizung integriert ist.

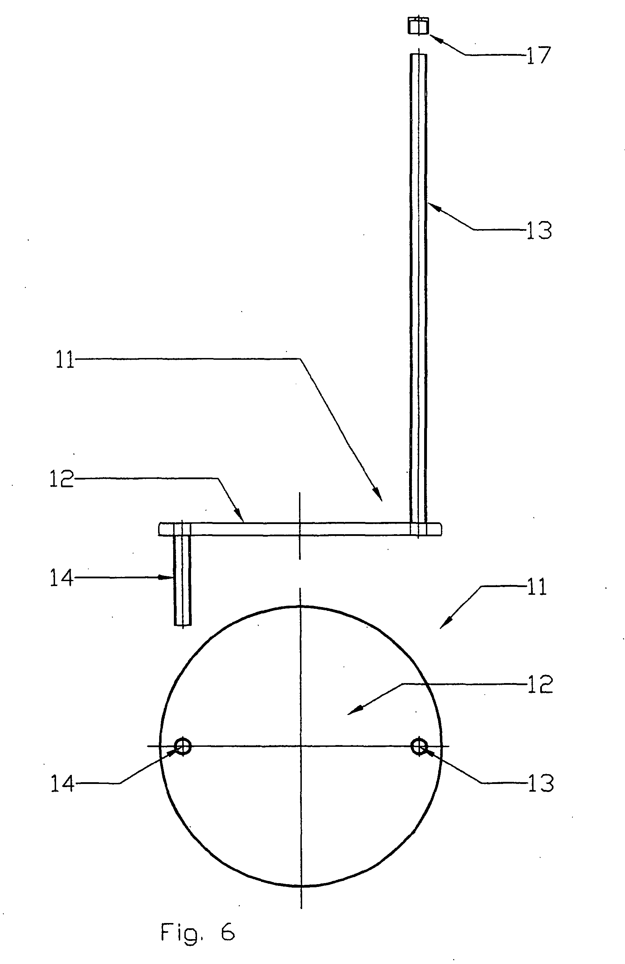

Zur Optimierung der Nutzung der Solarenergie und schnellen Bereitstellung warmen bzw. heißen Brauchwassers, insbesondere im höchsten Punkt des Kessels, ist bei beiden Ausführungen eines Pufferspeichers bzw. Kombispeicherkessels 1 bzw. 10 in den Kessel ein als Einzelheit in Fig. 6 in einer Seiten- und in der Draufsicht gezeigter Schichtungsstabilisator 11 eingesetzt. Dieser besteht insgesamt aus einem gut wärmeisolierenden Material, insbesondere Polypropylen, und umfaßt eine in ihrem Außenduchmesser dem Innendurchmesser des Kessels angepaßte Ronde 12 sowie ein Steigrohr 13 und ein Fallrohr 14, die in einer Ebene einander gegenüberliegend nahe am Außenumfang der Ronde 12 angeordnet sind, so daß sich die notwendigen Einbauten, insbesondere die Wärmetauscher und/oder die Brennkammer, über den gesamten Kessel verteilt ungehindert anbringen lassen (vgl. Fig. 2). Die Ronde 12 des Schichtungsstabilisators 11 befindet sich in ihrer Einbaulage unmittelbar über dem Solarwärmetauscher 6 (vgl. Fig. 1), d.h. im unteren Bereich des Kessels und unterteilt diesen in einen kleineren unteren Kesselraum 15 und einen demgegenüber sehr viel größeren, oberen Puffer-Kesselraum 16.

Bei Zuführung der Solarenergie über den Solarkreislauf 2 (vgl. Fig. 1), heizt sich das relativ geringe Füllvolumen des unteren Kesselraums 15 sehr schnell auf, steigt über das Steigrohr 13 in den oberen Bereich des Kessels, während gleichzeitig das darunterliegende kalte Wasser aus dem Puffer-Kesselraum 16 über das Fallrohr 14 in den unteren Kesselraum 15 unterhalb der wärmeisolierenden Ronde 12 des Schichtungsstabilisators 11 gedrückt wird, wo sich das Wasser danach erwärmt. Infolge dieser Schwerkraftzirkulation wird die Wassertemperatur des Kesselinhalts von oben nach unten sukzessive auf ein gleiches Niveau gebracht, wobei im höchsten Punkt des Kessels sehr schnell warmes Brauchwasser zur Nutzung entnommen werden kann.

Wie in Fig. 6 schematisch angedeutet, befindet sich oben auf dem Steigrohr 13 eine mit einer Durchlaßöffnung bzw. Bohrung versehene Abschlußkappe 17, Stopfen oder dergleichen. Damit wird - wie alternativ mit einem sogar einer Regelung zugänglichen Thermostat - erreicht, daß von dem im unteren Kesselraum 15 schnell erwärmten Wasser nicht schon gleich zu viel Wasser mit einem möglicherweise noch zu niedrigem Temperaturniveau aufsteigt, was im Kessel insgesamt zu einem zu niedrigen Temperaturniveau führen könnte.

## Patentansprüche

1. Heizanlage mit einem Pufferspeicher bzw. Kombispeicherkessel (1 bzw. 10), der als solarer Schichtspeicher optional mit integrierter, gas- oder ölbefeuerter Brennkammer (9) ausgebildet ist und mehrere Kreisläufe vereint, wie einen Solarkreislauf (2), einen Kreislauf für Wasch- und Duschwasser (3) und eine Versorgung einer Heizung (4 a, 4 b), sowie Anschlüsse zur Aufnahme von an die Verbraucherleitungen angeschlossenen Wärmetauschern (8) aufweist, wobei im unteren Bereich des Pufferspeichers bzw. Kombispeicherkessels (1 bzw. 10) oberhalb eines dort angeschlossenen Solar-Wärmetauschers (6) ein den Innenraum des Kessels unterteilender Schichtungsstabilisator (11) angeordnet und über diesen der untere Kesselraum (15) mit dem oberen, größeren Puffer-Kesselraum (16) strömungstechnisch verbunden ist.
**dadurch gekennzeichnet,**
**daß** der Schichtungsstabiliator (11) aus einer den Kesseldurchmesser ausfüllenden Ronde (12) aus einem gut wärmeisolierenden Material besteht, in die ein sich über nahezu die gesamte Höhe des oberen Puffer-Kesselraums (16) erstreckendes Steigrohr (13) und von diesem entfernt ein in den unteren Kesselraum (15) eintauchendes Fallrohr (14) angeodnet sind.

2. Heizanlage nach Anspruch 1,
**dadurch gekennzeichnet,**
**daß** auch das Steigrohr (13) und das Fallrohr (14) aus einem gut wärmeisolierenden Material bestehen.

3. Heizanlage nach Anspruch 1 oder 2,
**dadurch gekennzeichnet,**
**daß** das Steig- und das Fallrohr (13 bzw. 14) in einer Ebene einander gegenüberliegend nahe am Außenumfang der Ronde (12) angeordnet sind.

4. Heizanlage nach einem der Ansprüche 1 bis 3,
**dadurch gekennzeichnet,**
**daß** oben auf dem Steigrohr (13) eine mit einer Durchlaßöffnung versehene Abschlußkappe (17) vorgesehen ist.

5. Heizanlage nach einem der Ansprüche 1 bis 3,
**dadurch gekennzeichnet,**
**daß** oben auf dem Steigrohr (13) ein Thermostat vorgesehen ist.

## Claims

1. A heating system with a buffer or combined storage boiler (1 and 10 respectively), which is designed as a solar collector, optionally with an integrated gas- or oil-fired combustion chamber (9), and combines a plurality of circuits, such as a solar circuit (2), a circuit for washing and shower water (3) and a supply to a heating device (4 a, 4 b), and has connections for receiving heat exchangers (8) connected to the consumer pipes, wherein a laminated stabiliser (11) splitting the inner space of the boiler is arranged in the lower region of the buffer or combined storage boiler (1 and 10 respectively) above a solar heat exchanger (6) connected at that point), and wherein the lower boiler space (15) is connected, in terms of flow, to the upper, larger buffer boiler space (16) by the stabiliser,
**characterised in that** the laminated stabiliser (11) consists of a round (12) of material providing good thermal insulation filling the boiler diameter, in which are arranged a riser pipe (13) extending almost throughout the height of the upper buffer boiler space (16) and, some distance from this, a down pipe (14) immersed in the lower boiler space (15).

2. The heating system according to Claim 1, **characterised in that** the riser pipe (13) and the down pipe (14) consist of a material that provides good thermal insulation.

3. The heating system according to Claim 1 or 2, **characterised in that** the riser and down pipes (13 and 14 respectively) are arranged in one plane opposed to each other close to the outer periphery of the round (12).

4. The heating system according to any one of Claims 1 to 3, **characterised in that** a sealing cap (17), provided with a through opening, is arranged at the top on the riser pipe (13).

5. The heating system according to any one of Claims 1 to 3, **characterised in that** a thermostat is provided at the top on the riser pipe (13).

## Revendications

1. Installation de chauffage, avec un accumulateur tampon ou une chaudière d'accumulation mixte (1 ou 10), qui est conçu en tant qu'accumulateur solaire à couches, en option, avec une chambre de combustion (9) intégrée, exploitée au gaz ou au fuel, et qui réunit plusieurs circuits, comme un circuit solaire (2), un circuit pour l'eau de lavage et l'eau de douche (3) et une alimentation pour un chauffage (4A, 4b), ainsi que des connexions pour la réception d'échangeurs thermiques (8) branchés sur les branchements d'abonnés, un stabilisateur de stratification (11) étant disposé dans la zone inférieure de l'accumulateur tampon ou chaudière d'accumulation mixte (1 ou 10), au-dessus d'un échangeur thermique solaire (6), branché à cet endroit et au dessus de ce dernier, la chambre de chauffe inférieure (15) étant reliée par technique de circulation fluidique avec la chambre de chauffe tampon supérieure (16), plus grande,
**caractérisée en ce que** le stabilisateur de stratification (11) est constitué d'un flan circulaire (12) remplissant le diamètre de la chaudière en un matériau bien thermoisolant, dans lequel est disposée une conduite montante (13) s'étendant pratiquement sur toute la hauteur de la chambre de chauffe tampon supérieure (16) et à distance de celle-ci, une conduite descendante (14), plongeant dans la chambre de chauffe inférieure (15).

2. Installation de chauffage selon la revendication 1,
**caractérisée en ce que** la conduite montante (13) et la conduite descendante (14) sont également en un matériau bien thermoisolant.

3. Installation de chauffage selon la revendication 1 ou 2,
**caractérisée en ce que** la conduite montante et la conduite descendante (13 ou 14) sont disposées dans un plan et mutuellement opposées, à proximité de la périphérie extérieure du flan circulaire (12).

4. Installation de chauffage selon l'une quelconque des revendications 1 à 3,
**caractérisé en ce que** sur le haut, sur la conduite montante (13), on a prévu une calotte de terminaison (17) munie d'un orifice de passage.

5. Installation de chauffage selon l'une quelconque des revendications 1 à 3,
**caractérisée en ce que** sur le haut, sur la conduite montante (13), on a prévu un thermostat.
